# EUROPEAN PATENT SPECIFICATION

(11) **EP 4 198 319 B1**
(45) Date of publication and mention of the grant of the patent: **19.11.2025**
(21) Application number: 21215471.0
(22) Date of filing: 17.12.2021
(51) Int. Cl.: F16D 1/093, F04D 29/044

(54) **PUMP ASSEMBLY**
PUMPENANORDNUNG
ENSEMBLE POMPE

(43) Date of publication of application: 21.06.2023
(73) Proprietor: Grundfos Holding A/S, 8850 Bjerringbro (DK)
(72) Inventor: Mikkelsen, Steen, 8850 Bjerringbro (DK); Jepsen, Troels, 8850 jerringbro (DK); Poulsen, Brian Lundsted, 8870 Langå (DK)
(74) Representative: Patentanwälte Hemmer Lindfeld Frese Partnerschaft mbB

(56) References cited:
- EP-A1- 3 246 574
- WO-A1-2008/039143
- WO-A1-2017/050805
- CN-U- 204 344 508
- KR-A- 20160 042 388

## Description

### TECHNICAL FIELD

The present disclosure is directed to a pump assembly, in particular to a dry runner centrifugal pump assembly comprising an integrated electric motor drive that is releasably coupled to an impeller in a pump housing. The pump assembly may be a single stage or multistage centrifugal pump, in particular for pumping water or another fluid. The motor drive may preferably comprise a permanent magnet synchronous motor (PMSM).

### BACKGROUND

There is a general interest in increasing the operating range of a pump assembly while designing it as compact as possible. In particular, it is a technical challenge to increase the maximum speed of the pump assembly while achieving a compact design. Slight dynamic imbalances or eccentricities can cause major problems at high rotational speeds. Particularly, known releasable connections between the motor drive shaft and the pump drive shaft have shown to introduce, depending on the size of the pump assembly, intolerable dynamic imbalances or eccentricities at high rotational speeds.

US 8,376,701 B2 describes a multi-stage centrifugal pump assembly, wherein the connection between the motor shaft and the pump shaft is achieved by way of a thread and press-fitting. However, manufacturing the thread and press-fitting requires very tight tolerances to achieve a required level of angular alignment between the motor shaft and the pump shaft. Such tight manufacturing tolerances increase the number of quality management rejections and thus manufacturing cost in total. Furthermore, the connection between the motor shaft and the pump shaft in US 8,376,701 B2 is not releasable without disassembling the pump drive shaft from the pump housing. CN204344508U describes a coupling of a pump drive shaft shaft and a hollow motor drive shaft that comprises a tapered sleeve and bolts to fix both shafts whereby the bolts circumferentially surround the pump shaft on the outside.

Another technical challenge is to provide a drive shaft coupling that allows to couple a certain electric motor drive to a large variety of pumps, or a large variety of electric motor drives to a certain pump. Pump drive shafts may have standardised diameters and lengths, e.g., compliant with ISO standard 2858, but a variety of different pump drive shaft lengths may be used for the same diameter. So, it is desirable that the drive shaft coupling can be, at least within certain limits, freely positioned in axial direction.

It is therefore an object of the present disclosure to provide a modular pump assembly, wherein the drive shaft coupling between the motor drive shaft and the pump drive shaft can be easily released without disassembling the pump drive shaft from the pump housing, and wherein the drive shaft coupling is freely positionable in axial direction and copes with less tight manufacturing tolerances in terms of angular alignment between the motor shaft and the pump shaft in order to reduce intolerable dynamic imbalances or eccentricities at high rotational speeds.

### SUMMARY

According to a first aspect of the present disclosure, a pump assembly is provided comprising:
- an electric drive motor comprising at least a motor drive shaft and a rotor, wherein the motor drive shaft extends along a rotor axis and the rotor is mechanically coupled to the motor drive shaft; and
- a pump housing enclosing an impeller that is mechanically coupled to a pump drive shaft, wherein the pump drive shaft extends along the rotor axis,
wherein the motor drive shaft is releasably coupled to the pump drive shaft by a drive shaft coupling for transferring torque from the motor drive shaft to the pump drive shaft. The pump assembly is characterised by the motor drive shaft being hollow from a first axial motor drive shaft end to a second axial motor drive shaft end, wherein the pump drive shaft protrudes into the hollow motor drive shaft at the first axial motor drive shaft end, wherein the drive shaft coupling is arranged at least partly within the hollow motor drive shaft for transferring torque from the motor drive shaft to the pump drive shaft by frictional connection with a radial inner surface of the hollow motor drive shaft and/or a radial outer surface of the pump drive shaft, wherein the drive shaft coupling is accessible by an elongate tool, e.g. a relatively long allen key or torx wrench, through the second axial hollow motor drive shaft drive end for selectively tightening and releasing the drive shaft coupling. Preferably, the rotor is part of a permanent magnet synchronous motor (PMSM), i.e., the rotor comprises one or more permanent magnets.

So, the motor drive shaft is hollow along its full length. A cap or plug and/or another kind of filling element may be removably inserted into the second axial motor drive shaft end, though. The first axial motor drive shaft end faces towards the pump housing and the second axial motor drive shaft end faces away from the pump housing. Preferably, the drive shaft coupling is fully arranged within the hollow motor drive shaft. The axial position of the drive shaft coupling within the hollow motor drive shaft can be - within limits - arbitrarily chosen as needed to couple the motor drive shaft to the pump drive shaft. The motor drive shaft can thus be coupled to different lengths of pump drive shafts.

The drive shaft coupling according to the present disclosure is very compact and has very small radial dimensions in order to reduce intolerable dynamic imbalances or eccentricities at high rotational speeds above 500 rpm or even above 6000 rpm. Furthermore, the drive shaft coupling copes with less tight manufacturing tolerances in terms of angular alignment between the motor drive shaft and the pump drive shaft. Additionally, the drive shaft coupling disclosed herein copes very well with axial and radial forces originating from the pump, i.e. it is neither loosened by such forces nor does it amplify them. It may even allow for a certain resilience and/or provides a dampening effect on vibrations and/or axial and radial forces originating from the pump. Finally, the drive shaft coupling between the motor drive shaft and the pump drive shaft can be easily released without disassembling the pump drive shaft from the pump housing. The integrated electric motor drive can thus be easily unmounted from the pump housing while the pump housing may remain fully assembled and mounted to a filled or even pressurised fluid pipe.

Optionally, the radial outer surface of the pump drive shaft and/or the radial inner surface of the hollow motor drive shaft may have a frusto-conical shape. Such a frusto-conical shape has a beneficial self-centring and self-aligning effect between the motor drive shaft and the pump drive shaft.

Optionally, the drive shaft coupling may comprise a radially expandable or radially compressible fastening element being at least partly arranged between the radial outer surface of the pump drive shaft and the radial inner surface of the hollow motor drive shaft. The fastening element may, for example, comprise an expandable sleeve.

Optionally, the fastening element may have a wedged shape corresponding to a frusto-conical shape of the radial outer surface of the pump drive shaft and/or the radial inner surface of the hollow motor drive shaft. Thereby, the fastening element may be squeezed between the radial outer surface of the pump drive shaft and the radial inner surface of the hollow motor drive shaft by an axial motion of the fastening element.

Optionally, the fastening element may be axially slotted from one or both axial ends of the fastening element. In case of being axially slotted from both axial ends, the fastening element is preferably slotted from one axial end and the other axial end in an alternating fashion distributed around the rotor axis.

Optionally, the fastening element may comprise n≥2 axial slots distributed in an n-fold rotational symmetry with respect to the rotor axis. Preferably, every other of the slots may extend from the one axial end, and a slot between said every other of the slots may extend from the other axial end.

Optionally, the drive shaft coupling may comprise an axially screwable fastener being directly or indirectly coupled to the fastening element by a form fit and/or a thread, wherein the fastener is screwable by an elongate tool being inserted through the second axial hollow mofor drive shaft drive end into the hollow motor drive shaft. For example, the fastener may be screwed into an axial pump drive shaft end facing away from the pump housing. A head of the fastener may then directly or indirectly engage with the fastening element by a form fit. Alternatively, the fastener may be screwed into the fastening element to make it expand, e.g., hydraulicly.

Optionally, the fastening element may define at least one hydraulic pressure chamber arranged between the radial inner surface of the hollow motor drive shaft and the radial outer surface of the pump drive shaft, wherein the fastening element is expandable upon pressurising the at least one hydraulic pressure chamber. For example, the fastening element may comprise a sleeve section that can be hydraulicly "pumped up" by screwing the fastener into the fastening element. The hydraulic pressure chamber may be filled by an essentially incompressible hydraulic fluid, e.g., hydraulic oil. Preferably, the fastening element may define two, three or more hydraulic pressure chambers being in fluid communication with each other, and wherein each hydraulic pressure chamber preferably rings the pump drive shaft.

Optionally, the fastener may be configured to directly or indirectly press hydraulic fluid into the at least one hydraulic pressure chamber upon being screwed for tightening the drive shaft coupling. The at least one hydraulic pressure chamber may then expand upon the increased hydraulic pressure of the hydraulic fluid in the chamber, so that the static friction of the fastening element with both the radial outer surface of the pump drive shaft and the radial inner surface of the hollow motor drive shaft is increased. The at least one hydraulic pressure chamber may preferably be elastically expandable, so that it contracts if the hydraulic pressure in the at least one hydraulic pressure chamber is relieved upon releasing the drive shaft coupling by unscrewing the fastener.

Optionally, the fastener may be directly or indirectly coupled to the fastening element for selectively pushing the fastening element towards the first axial motor drive shaft end and pulling the fastening element towards the second axial motor drive shaft end. Preferably, a head of the fastener pushes the fastening element towards the first axial motor drive shaft end when it is screwed into an axial end of the pump drive shaft.

Optionally, the pump assembly may further comprise a releasing sleeve axially clasping a head of the fastener and being coupled to the fastening element by a form fit. The releasing sleeve may pull the fastening element towards the second axial motor drive shaft end when it is unscrewed out of the axial end of the pump drive shaft. The head of the fastener may abut against the releasing sleeve to push it towards the second axial motor drive shaft end, and the fastening element follows. For example, if the radial outer surface of the pump drive shaft has a frusto-conical shape, a motion of the fastening element towards the second axial motor drive shaft end has the effect of releasing the drive shaft coupling.

Optionally, the electric drive motor may comprise a motor housing, wherein the motor housing comprises an access opening arranged coaxially with the rotor axis for accessing the drive shaft coupling by an elongate tool through the second axial motor drive shaft end. The access opening in the motor housing may be covered by a cover element in form of a cap or plug, wherein the cover element is removable for accessing the drive shaft coupling by an elongate tool.

Optionally, the pump drive shaft and/or the motor drive shaft may comprise engaging surfaces for a form fit coupling with a tool, e.g., a jaw wrench, applied to prevent rotation upon tightening or releasing the drive shaft coupling. This is useful to prevent rotation of the rotating parts when the drive shaft coupling is tightened or released. Preferably, the pump drive shaft comprises the engaging surfaces in an axial section between the motor housing and the pump housing that is laterally accessible by the tool, e.g., a jaw wrench. For example, a motor stool may mechanically connect the integrated electric motor drive with the pump housing. The motor stool may have at least one lateral access opening to give tool access to the engaging surfaces at an axial section pump drive shaft between the motor housing and the pump housing.

Optionally, the pump assembly may be a dry runner centrifugal pump assembly. Preferably, the electric drive motor of the dry runner centrifugal pump assembly is an integrated electric motor drive comprising power electronics for controlling a motor current. Preferably, the integrated electric motor drive is a pump housing, wherein the integrated electric motor drive motor is releasably mounted to the pump housing by means of a motor stool. The integrated electric motor drive preferably comprises a permanent magnet synchronous motor (PMSM).

Optionally, the pump assembly may further comprise a pump drive shaft seal element for sealing the pump housing around the pump drive shaft, wherein the pump drive shaft seal element is arranged axially between the impeller and the drive shaft coupling.

Optionally, the electric drive motor may be configured to run at speeds above 500 rpm, preferably above 6000 rpm.

### SUMMARY OF THE DRAWINGS

Embodiments of the present disclosure will now be described by way of example with reference to the following figures of which:
- Fig. 1: shows a partially cut perspective view of an example of an embodiment of a pump assembly according to the present disclosure;
- Fig. 2: shows an exploded view of the parts of an example of an embodiment of a dry runner centrifugal pump assembly according to the present disclosure;
- Fig. 3a,b: show perspective longitudinal cut views of the drive shaft coupling of the dry runner centrifugal pump assembly according to Figs. 1 and 2;
- Fig. 4a: shows a top view on a pump drive shaft with a drive shaft coupling according to Figs. 3a,b;
- Fig. 4b: shows a longitudinal cut view along B-B as shown in Fig. 4a;
- Fig. 4c: shows an exploded perspective view of the parts shown in Fig. 4b;
- Fig. 5: shows a partially cut perspective view of another example of an embodiment of a pump assembly according to the present disclosure;
- Fig. 6a: shows a top view on a pump drive shaft with a drive shaft coupling according to Fig. 5;
- Fig. 6b: shows a longitudinal cut view along B-B as shown in Fig. 6a;
- Fig. 6c: shows an exploded perspective view of the parts shown in Fig. 6b;
- Figs. 7a-c: show different longitudinal cut views of another embodiment of a drive shaft coupling; and
- Fig. 8a: shows an exploded longitudinal cut view of the drive shaft coupling according to Figs. 7a-c;
- Fig. 8b: shows a perspective view of the main body of the fastening element; and
- Fig. 8c: shows a perspective view of the inner sleeve wall before being inserted and welded to the main body of the fastening element.

### DETAILED DESCRIPTION

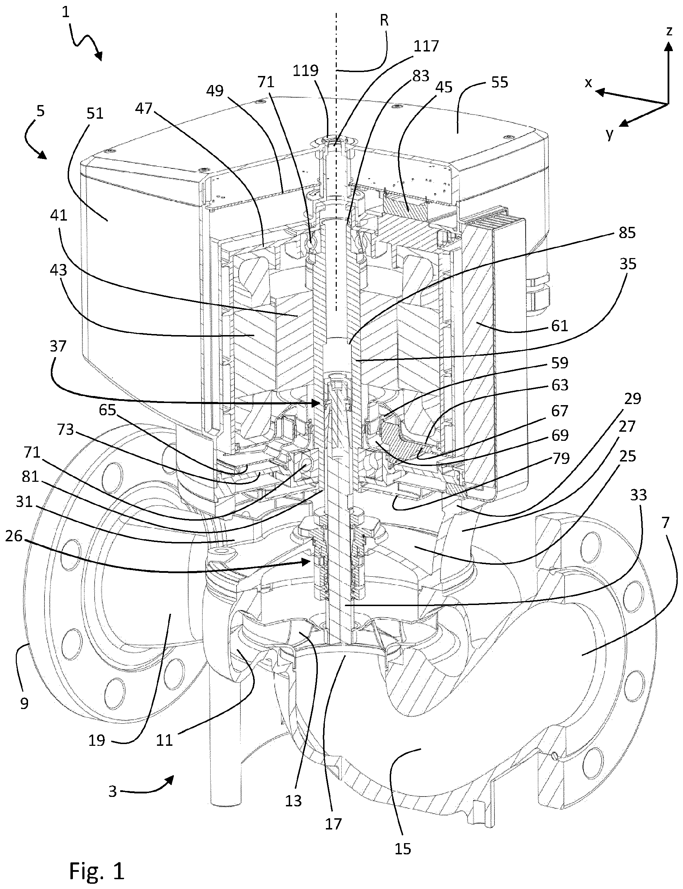

Fig. 1 shows a dry runner centrifugal pump assembly 1 comprising a pump housing 3 and an integrated electric motor drive 5. The pump assembly 1 is configured to be installed at a fluid pipe (not shown) in order to drive a flow of a fluid, e.g., water, from a pump housing inlet 7 towards a pump housing outlet 9. The pump housing inlet 7 and the pump housing outlet 9 are arranged coaxially to each other at opposite sides of the pump housing 3. Thereby, the pump assembly 1 can be installed at a straight section of a fluid pipe. The pump housing inlet 7 and the pump housing outlet 9 each comprise a connection flange for fluid-tight connection with a fluid pipe. The pump housing 3 further defines a pump housing chamber 11 arranged between the pump housing inlet 7 and the pump housing outlet 9. The pump housing chamber 11 encloses an impeller 13 that is rotatable about a rotor axis R within the pump housing chamber 11. The pump housing 3 further defines a suction path 15 guiding the fluid from the pump housing inlet 7 towards a suction mouth 17 of the impeller 13. The pump housing 3 further defines a pressure path 19 guiding the fluid that radially exits the impeller 13 along a volute path towards the pump housing outlet 9.

In order to facilitate the description of the arrangement of the components of the pump assembly 1 relative to each other, Fig. 1 shows a right-handed Cartesian coordinate system, of which the z-axis is arbitrarily chosen to extend along the rotor axis R. The x-axis is arbitrarily chosen to be the coaxial axis of the pump housing inlet 7 and the pump housing outlet 9 pointing from the pump housing inlet 7 towards the pump housing 9. The y-axis is a lateral axis perpendicular to a xz-plane spanned by the x-axis and the z-axis. Preferably, the pump assembly 1 is a vertical pump, i.e., the rotor axis R is the vertical axis z. Thus, the z-axis points vertically upward. The x-axis and the y-axis span a horizontal xy-plane. It should be noted that the pump assembly 1 may be installed in any spatial orientation; Fig. 1 merely shows a preferred embodiment with a vertical rotor axis R. Therefore, spatial terms like "upper", "lower", "above", and "below" etc. refer to an embodiment with a z-axis pointing vertically upward. The terms "axial", "lateral" shall refer to the rotor axis R if not specified otherwise.

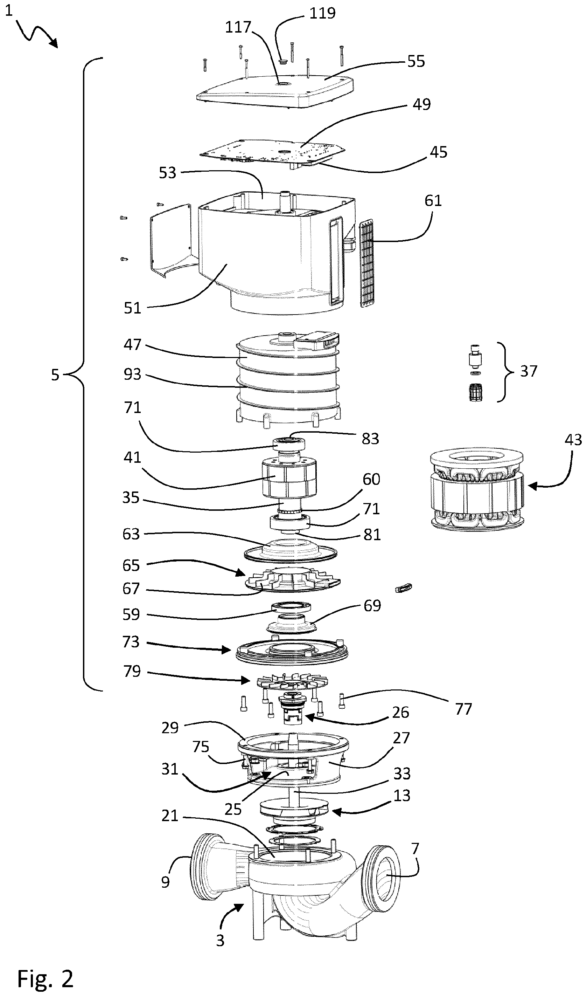

The pump housing 3 comprises an upper opening 21 (see Fig. 2) for inserting the impeller 13 when the pump is assembled. The impeller 13 is mechanically coupled to a pump drive shaft 33 extending along the rotor axis R vertically upward out of the pump housing chamber 11. The upper opening 21 of the pump housing chamber 11 is sealingly closed by a pump housing lid 25. The pump housing lid 25 acts as a bearing carrier for a shaft seal element 26 that functions as a shaft seal for the pump drive shaft 33 protruding out of the pump housing chamber 11.

The integrated electric motor drive 5 is releasably mechanically coupled to the pump housing 3 by means of a motor stool 27. In the embodiments shown, the pump housing lid 25 is an integral part of the motor stool 27 and/or formed by it. Alternatively, the pump housing lid 25 and the motor stool 27 may be separate parts. The motor stool 27 defines an upper mounting flange 29 (see Fig. 2) for releasably mounting the integrated electric motor drive 5 thereon. The motor stool 27 has lateral openings 31 (see Fig. 2). The opening 31 allows access to fixing screws, to have free sight to inspect the shaft seal element 26, to see the pump drive shaft 33 rotation, and to allow exhaustion of cooling air that was heated up by a heat sink of the integrated electric motor drive 5. The last point will be explained in more detail below.

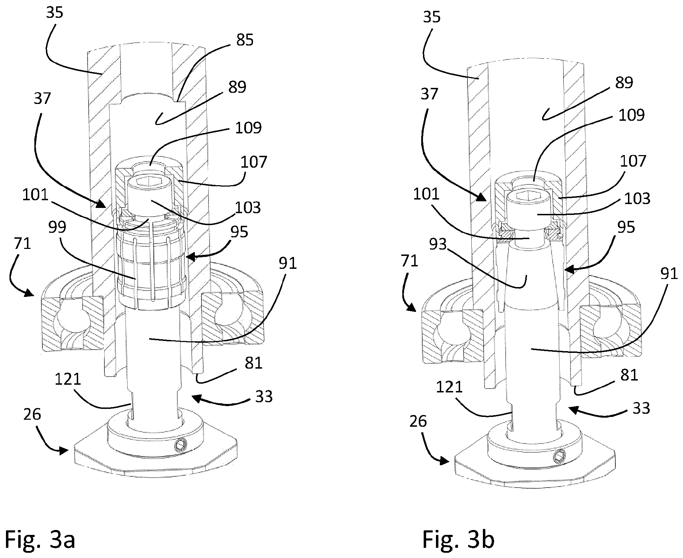

It should be noted that the full drive shaft has two coaxially arranged sections that are releasably coupled to each other to transfer torque: a lower pump drive shaft 33 and an upper motor drive shaft 35 that is hollow along its full axial length. The pump drive shaft 33 extends from the pump housing 3 towards the integrated electric motor drive 5. The motor drive shaft 35 extends within the integrated electric motor drive 5 and may or may not protrude at a lower axial end of the integrated electric motor drive 5. There is a specific releasable drive shaft coupling 37 between the pump drive shaft 33 and the motor drive shaft 35 that is an essential feature of the present disclosure. The releasable drive shaft coupling 37 may be arranged within the integrated electric motor drive 5 (as shown in Fig. 1) or within the motor stool 27. The releasable drive shaft coupling 37 is explained in more detail in Figs. 3a,b, 4a-c, 6a-c, 7a-c and 8a-c.

Referring to Figs. 1 and 2, the integrated electric motor drive 5 comprises rotatable parts and static parts. The rotatable parts comprise the hollow motor drive shaft 35 and a rotor 41. The motor drive shaft 35 extends along the rotor axis R and the rotor 41 is mechanically coupled to the motor drive shaft 35. The static parts comprise a stator 43 and power electronics 45 for controlling an electric current through the stator 43. The stator 43 surrounds the rotor 41. The stator 43 is enclosed by a stator housing 47, which preferably comprises a thermally conductive material, e.g., aluminium. The power electronics 45 are arranged on a printed circuit board (PCB) 49 extending essentially perpendicular to the rotor axis R, i.e., in a horizontal xy-plane, in an upper axial and portion of the integrated electric motor drive 5. The integrated electric motor drive 5 further comprises a motor housing 51 enclosing the stator housing 47 with the stator 43 and the PCB 49 with the power electronics 45. An upper opening 53 (see Fig. 2) of the motor housing 51 is closed by a motor housing lid 55. The motor housing 51 and/or the motor housing lid 55 are preferably made of a material comprising a polymer and/or composite material. The power electronics 45 define a heat dissipation surface facing downward from the PCB 49 towards the stator housing 47 in order to provide a direct or indirect thermal contact face for cooling purposes.

The integrated electric motor drive 5 further comprises a liquid cooling system comprising a closed liquid cooling circuit 57 and a liquid coolant agitator 59. The closed liquid cooling circuit 57 is filled with liquid coolant being in direct or indirect thermal contact with the stator 43 and/or the power electronics 45. The term "direct or indirect thermal contact" shall mean herein that there is no airgap or heat insulating material interposed. The term "direct or indirect thermal contact" shall include embodiments with one or more thermally conductive material(s) interposed.

The liquid coolant agitator 59 is arranged axially below the rotor 41 and configured to circulate the liquid coolant along the closed liquid cooling circuit 57. The liquid coolant agitator 59 is mounted within the closed liquid cooling circuit 57 to be rotatable about the rotor axis R; and it is magnetically coupled to one or more of the movable parts, e.g. here the motor drive shaft 35. In the shown embodiments, the liquid coolant agitator 59 is a hub-less propeller wheel ringing the motor drive shaft 35. The motor drive shaft 35 is equipped with two or more magnets and/or ferromagnetic sections 60, which are circumferentially distributed about the rotor axis R. The liquid coolant agitator 59 comprises corresponding magnets and/or ferromagnetic sections arranged around the magnets and/or ferromagnetic sections 60 of the motor drive shaft 35 within magnetic coupling range. The liquid coolant agitator 59 further comprises vanes defining fluid channels for driving the coolant flow in axial direction.

The exploded view of Fig. 2 shows an embodiment that only differs from the embodiment of Fig. 1 in the design of a heat sink 61 of the integrated electric motor drive 5. Fig. 2 shows some aspects of the components of the pump assembly 1 clearer than Fig. 1. For example, a lower axial opening of the stator housing 47 is closed by a stator housing bottom 63 to seal the stator 43 from below. The stator housing bottom 63 may comprise a thermally conductive material, which may be the same material that the stator housing 47 comprises. Preferably, however, the stator housing bottom 63 is electrically insulating and thus preferably comprises a polymer and/or composite material, whereas the stator housing 47 is preferably made of aluminium. There is also a coolant guiding element 65 arranged axially below the stator housing bottom 63 and ringing the liquid coolant agitator 59. An axial distance between the stator housing bottom 63 and the coolant guiding element 65 is defined by radially extending upward fins 67 of the coolant guiding element 65. An essentially radial section of the closed liquid cooling circuit 57 is defined laterally by the void between the fins 67, the coolant guiding element 65 from below, and by the stator housing bottom 63 at the top.

The liquid coolant agitator 59 is mounted on an agitator carrier 69, which rest on an axial top face of a lower one of radial rotor bearings 71. A top one of the radial rotor bearings 71 is located at an axial top end of the stator housing 47. The lower radial rotor bearing 71 is supported from below by a motor housing bottom 73 closing the motor housing 51 from below. The motor housing bottom 73 is preferably a structurally strong component made of metal, e.g., aluminium or steel. The motor housing bottom 73 provides a mounting flange to be coupled by screws 75 to the upper mounting flange 29 of the motor stool 27 and provides bore holes for mounting the stator housing 47 to the motor housing bottom 73 by screws 77.

The integrated electric motor drive 5 further comprises a radial fan 79 arranged axially below the motor housing bottom 73, i.e., outside of the motor housing 51 and circumferenced by the motor stool 27. The fan 79 is mechanically coupled to a bottom end section of the motor drive shaft 35 in order to rotate therewith.

An important advantage of the pump assembly 1 is that the integrated electric motor drive 5 is very easily unmountable from the pump housing 3 without a need to disassemble and/or unmount the pump housing 3 itself. Thus, the pump housing 3 may remain installed at a fluid pipe (not shown), which may remain filled with fluid, even under pressure, while the integrated electric motor drive 5 can be unmounted and/or exchanged. For unmounting the integrated electric motor drive 5, a service technician only needs to release the drive shaft coupling 37 and to loosen the screws 75 that connect the motor housing bottom 73 to the upper motor stool flange 29.

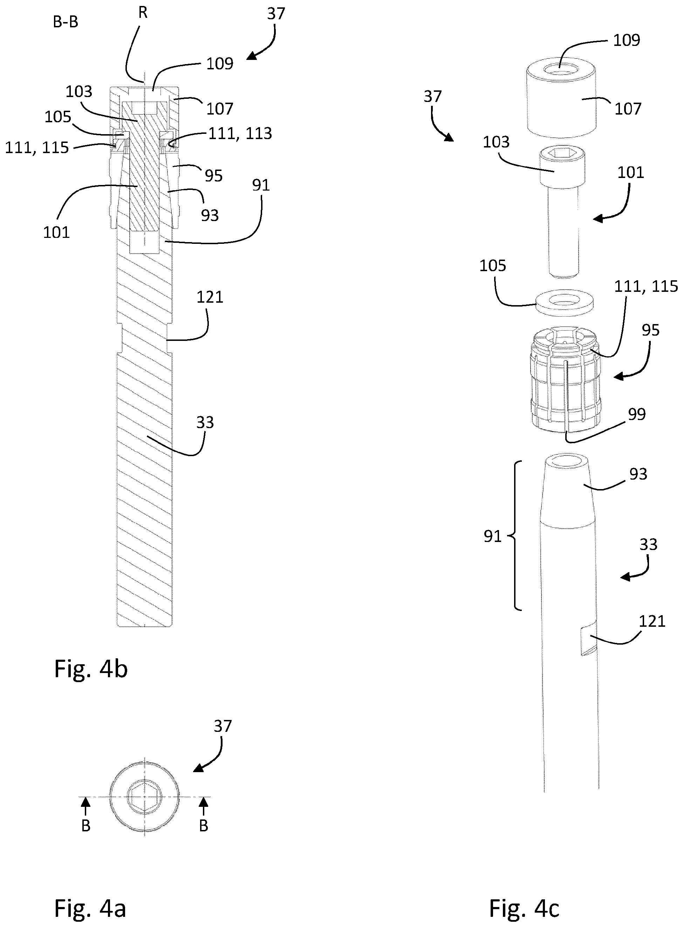

Figs. 3a, b and 4a-c show an embodiment of the drive shaft coupling 37. The drive shaft coupling 37 is fully arranged within the hollow motor drive shaft 35. The hollow motor drive shaft 35 comprises a first axial motor drive shaft end 81 facing towards the pump housing 3 and a second axial motor drive shaft end 83 facing away from the pump housing 3 (see Fig. 1). The motor drive shaft 35 is hollow all the way from the first axial motor drive shaft end 81 to the second axial motor drive shaft end 83. However, the first axial motor drive shaft end 81 has in this shown example a larger inner diameter than the second axial motor drive shaft end 83. The inner diameter of the hollow motor drive shaft 35 increases stepwise from the first axial motor drive shaft end 81 to the second axial motor drive shaft end 83, here at diameter step 85. The inner diameter of a motor drive shaft section 87 between the first axial motor drive shaft end 81 and the diameter step 85 is essentially constant. That motor drive shaft section 87 defines a radial inner surface 89 for frictional contact with the drive shaft coupling 37. The length of the motor drive shaft section 87 is long enough to allow a certain freedom in axially positioning the drive shaft coupling 37 as needed. The motor drive shaft 35 can thus be coupled to different lengths of pump drive shafts 33.

An upper end section 91 of the pump drive shaft 33 protrudes into the motor drive shaft section 87. The outer diameter of said upper end section 91 of the pump drive shaft 33 is significantly smaller than the inner diameter of the motor drive shaft section 87 and reduces towards the upper end of the pump drive shaft 33. Thereby, the upper end section 91 of the pump drive shaft 33 defines a radial outer surface 93 having a frusto-conical shape.

The drive shaft coupling 37 comprises a radially expandable fastening element 95 in form of a slotted sleeve being at least partly arranged between the radial outer surface 93 of the pump drive shaft 33 and the radial inner surface 89 of the hollow motor drive shaft 35. The fastening element 95 defines one or more frusto-conical inner surface(s) as a corresponding complement to the radial outer surface 93 of the pump drive shaft 33. The fastening element 95 further defines one or more cylindric outer surface(s) as a corresponding complement to the cylindric radial inner surface 89 of the hollow motor drive shaft 35. The fastening element 95 comprises a plurality of slots 99, wherein the slots 99 extend from the bottom and the top in an alternating fashion over more than half of the axial length of the fastening element 95. Thereby, the fastening element 95 is able to radially expand when is pushed axially downward on the frusto-conical radial outer surface 93 of the pump drive shaft 33.

The fastening element 95 is pushed downward by screwing a fastener 101 in form a screw bolt into the upper axial end of the pump drive shaft 33. The fastener 101 can be screwed by an elongate allen key inserted from the upper second axial motor drive shaft end 83 through the hollow motor drive shaft 35. When the fastener 101 is screwed in, a head 103 of the fastener 101 pushes the fastening element 95 directly or indirectly downward to expand. In the shown embodiment, a washer 105 may be placed between the fastener head 103 and the fastening element 95. The washer 105 may have a larger outer diameter than the fastener head 103, but the outer diameter of the washer 105 is significantly smaller than the inner diameter of the motor drive shaft section 87. If the fastening element 95 is pushed downward and thereby expands, the static friction of the fastening element 95 with both the radial outer surface 93 of the pump drive shaft 33 and the radial inner surface 89 of the hollow motor drive shaft 35 can be increased to such a high level that the motor drive shaft 35 is able to transfer the maximum motor torque to the pump drive shaft 33.

The drive shaft coupling 37 further comprises a releasing sleeve 107 axially clasping the head 103 of the fastener 101. The releasing sleeve 107 comprises an upper opening 109 to give tool access to the fastener head 103. The upper opening 109 is, however smaller than the outer diameter of the fastener head 103. The releasing sleeve 107 is further coupled to the fastening element 95 by a form fit 111. The form fit 111 is here realised by an inner collar 113 of the releasing sleeve 107 engaging into an outer circumferential groove 115 of the fastening element 95. This has the effect that the releasing sleeve 107 pulls the fastening element 95 upward when the fastener is unscrewed for releasing the drive shaft coupling 37.

Thereby, tightening and releasing of the drive shaft coupling 37 is very easily done. The only thing that a service technician needs to do is opening an upper access opening 117 in the motor housing 51 by removing a cap 119 and inserting an elongate allen key through the second axial motor drive shaft end 83 for screwing the fastener 101. In order to prevent the rotating parts of the motor from rotating during screwing, a jaw wrench may be laterally applied to engaging surfaces 121 arranged at the pump drive shaft 33.

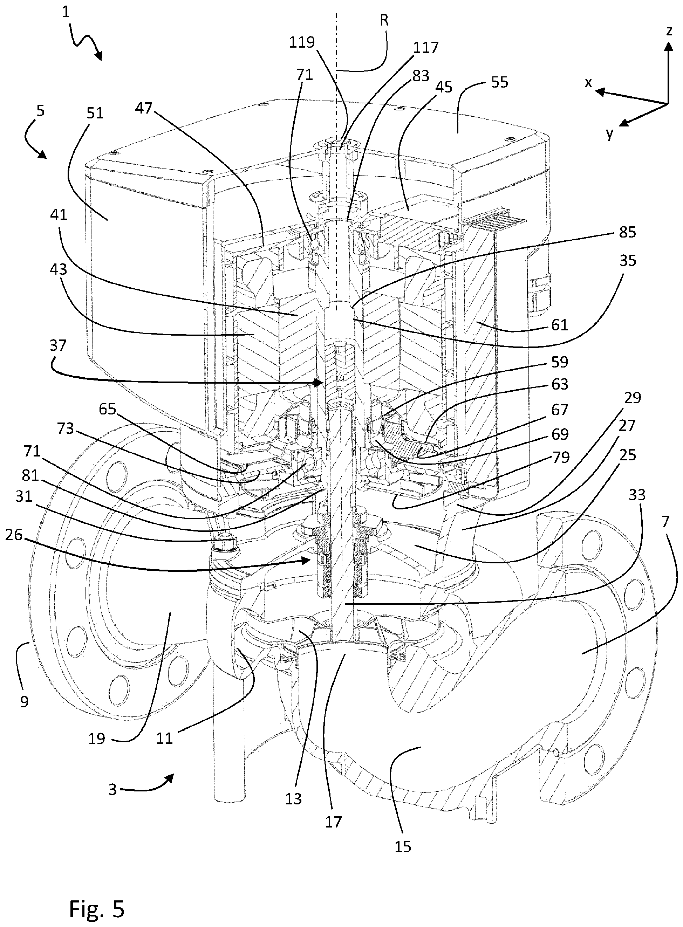

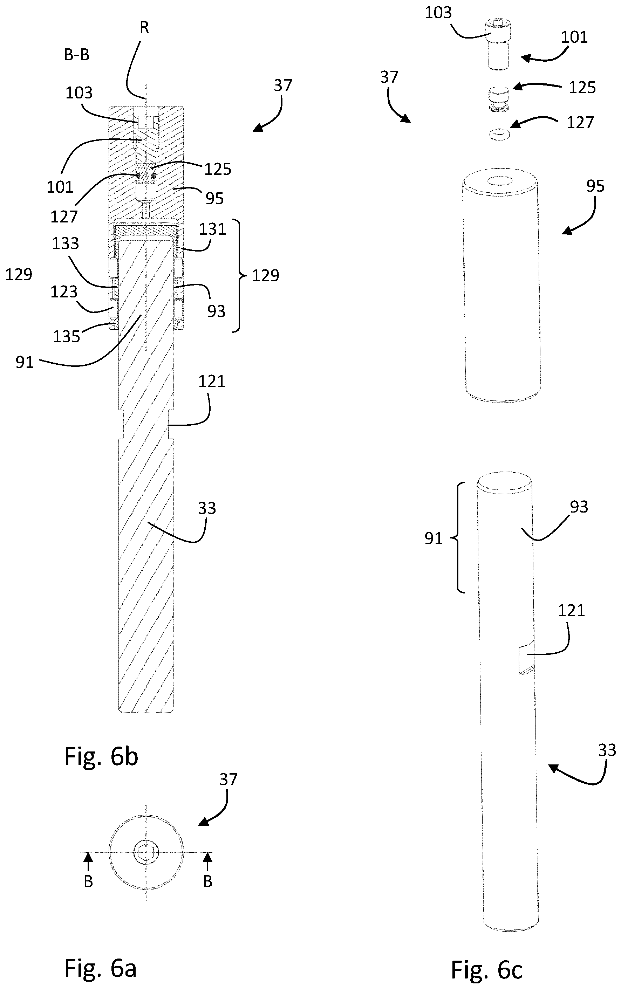

Figs. 5 and 6a-c show another embodiment of the drive shaft coupling 37. The fastening element 95 defines in this embodiment two ring-shaped hydraulic pressure chambers 123 arranged between the radial inner surface 89 of the hollow motor drive shaft 35 and the radial outer surface 93 of the pump drive shaft 33. The fastening element 95 is expandable upon pressurising the hydraulic pressure chambers 123. The hydraulic pressure chambers 123 are in fluid communication with each other and filled with a hydraulic fluid. The fastener 101 is here screwed into the fastening element 95 in order to press a piston element 125 downward to pressurise the hydraulic fluid. An O-ring 127 seals the piston element 125 laterally within the fastening element 95. The fastener 101 is thus configured to press the hydraulic fluid by means of the piston element 125 into the hydraulic pressure chambers upon being screwed into the fastening element 95 for tightening the drive shaft coupling 37.

The fastening element 95 defines a sleeve section 129 comprising an outer sleeve wall 131 and an inner sleeve wall 133. hydraulic pressure chambers 123 are located between the outer sleeve wall 131 and an inner sleeve wall 133. The outer sleeve wall 131 defines a radial outer surface for frictional contact with the radial inner surface 89 of the hollow motor drive shaft 35. The inner sleeve wall 133 defines a radial inner surface for frictional contact with the radial outer surface 93 of the pump drive shaft 33. The pump drive shaft 33 is inserted into the sleeve section 129. The outer sleeve wall 131 is defines by a main body 134 of the fastening element 95. The inner sleeve wall 133, however, belongs to a part that was separate from the main body 134 of the fastening element 95 before it was welded to it. Thereby, the fastening element 95 can be easily manufactured by milling the parts and welding them together at a bottom circumferential weld 135. The circumferential weld 135 closes the hydraulic pressure chambers 123 to the bottom, so that the O-ring 127 is the only sealing element needed to prevent leakage of hydraulic fluid.

As both the outer sleeve wall 131 and the inner sleeve wall 133 are relatively thin, they provide a certain elastic flexibility to bulge outward and inward, respectively, upon pressurising the hydraulic pressure chambers 123. Thus, if the fastener 101 is screwed downward so that the outer sleeve wall 131 and the inner sleeve wall 133 bulge, the static friction of the sleeve section 129 with both the radial outer surface 93 of the pump drive shaft 33 and the radial inner surface 89 of the hollow motor drive shaft 35 can be increased to such a high level that the motor drive shaft 35 is able to transfer the maximum motor torque to the pump drive shaft 33.

The advantage of the hydraulic drive shaft coupling 37 is that it is more tolerant to slight misalignments between the pump drive shaft 33 and the motor drive shaft 35. It may even provide a certain dampening effect and resilience without losing the ability to transfer the motor torque. Another advantage is that there is no frusto-conical shape or screw hole needed at the pump drive shaft 33. This means that the hydraulic drive shaft coupling 37 may be applicable to existing pump housings and pump drive shafts. The axial positioning of the drive shaft coupling 37 is as free as for the embodiment of Figs. 3a,b and 4a-c.

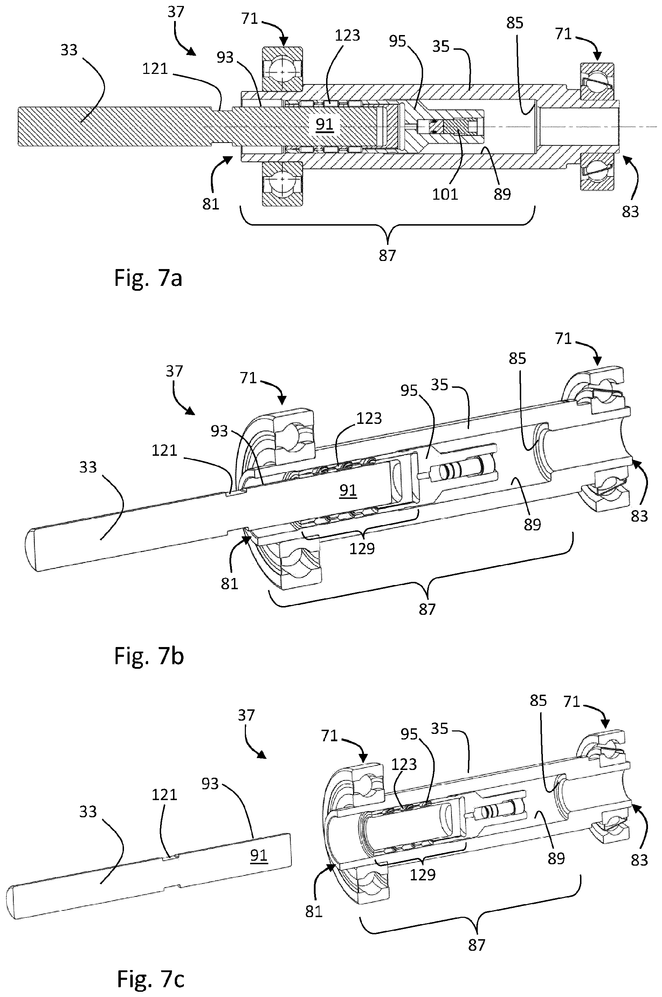

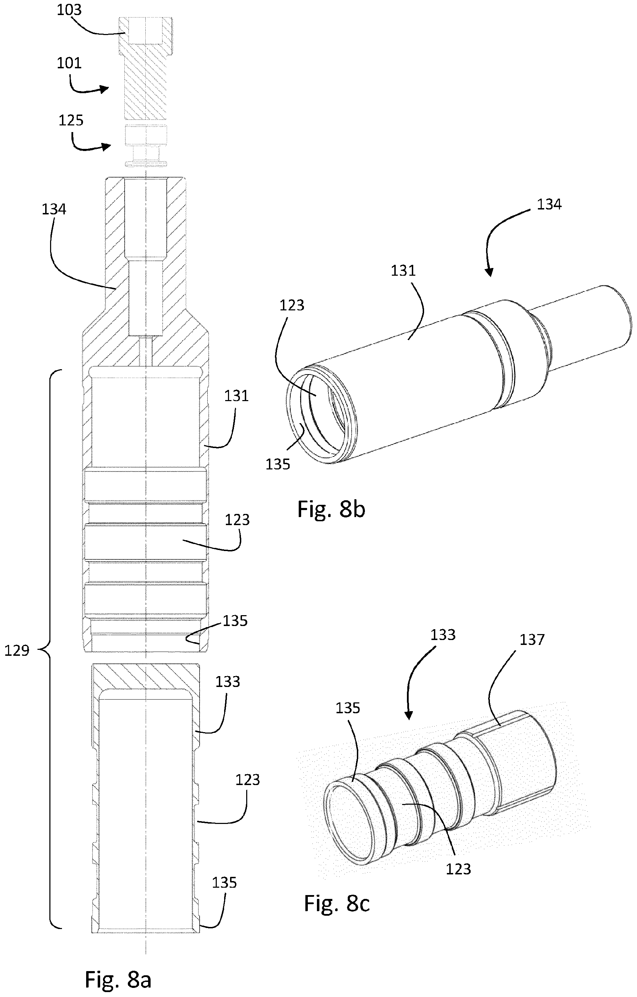

Figs. 7a-c and 8a-c show an embodiment of a hydraulic drive shaft coupling 37 with three ring-shaped hydraulic pressure chambers 123 arranged between the radial inner surface 89 of the hollow motor drive shaft 35 and the radial outer surface 93 of the pump drive shaft 33. Otherwise, it does not differ substantially from the embodiment of Fig. 5 and 6a-c. Figs. 8a-c show the different parts of the drive shaft coupling 37 before they are assembled together. Fig. 8c also shows how the fluid communication to the hydraulic pressure chambers 123 is achieved by axial channels 137. The outer diameter of sections between the ring-shaped hydraulic pressure chambers 123 is smaller than the outer diameter of the inner sleeve wall 133, so that hydraulic fluid can pass along between the hydraulic pressure chambers 123.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

### List of reference numerals:

- 1: dry runner centrifugal pump assembly
- 3: pump housing
- 5: integrated electric motor drive
- 7: pump housing inlet
- 9: pump housing outlet
- 11: pump housing chamber
- 13: impeller
- 15: suction path
- 17: suction mouth
- 19: pressure path
- 21: upper opening of pump housing
- 25: pump housing lid
- 26: shaft seal element
- 27: motor stool
- 29: upper mounting flange
- 31: lateral opening of motor stool
- 33: pump drive shaft
- 35: motor drive shaft
- 37: shaft coupling
- 41: rotor
- 43: stator
- 45: power electronics
- 47: stator housing
- 49: PCB
- 51: motor housing
- 53: upper opening of motor housing
- 55: motor housing lid
- 57: closed liquid cooling circuit
- 59: liquid coolant agitator
- 61: heat sink
- 63: stator housing bottom
- 65: coolant guiding element
- 67: fins of coolant guiding element
- 69: agitator carrier
- 71: radial rotor bearings
- 73: motor housing bottom
- 75: screws
- 77: screws
- 79: fan
- 81: first axial motor drive shaft end
- 83: second axial motor drive shaft end
- 85: diameter step
- 87: motor drive shaft section
- 89: radial inner surface of motor drive shaft
- 91: upper end section of the pump drive shaft
- 93: radial outer surface of the pump drive shaft
- 95: fastening element
- 99: slots
- 101: fastener
- 103: head of fastener
- 105: washer
- 107: releasing sleeve
- 109: upper opening
- 111: form fit
- 113: inner collar
- 115: outer circumferential groove
- 117: upper access opening
- 119: cap
- 121: engaging surfaces
- 123: hydraulic pressure chamber
- 125: piston element
- 127: O-ring
- 129: sleeve section of the fastening element
- 131: outer sleeve wall
- 133: inner sleeve wall
- 134: main body of the fastening element
- 135: weld
- 137: axial channel
- R: rotor axis
- z: vertical axis
- x: coaxial axis of the pump housing inlet and outlet
- y: lateral horizontal axis

## Claims

1. A pump assembly (1) comprising:
- an electric drive motor (5) comprising at least a motor drive shaft (35) and a rotor (41), wherein the motor drive shaft (35) extends along a rotor axis (R) and the rotor (41) is mechanically coupled to the motor drive shaft (35); and
- a pump housing (3) enclosing an impeller (13) that is mechanically coupled to a pump drive shaft (33), wherein the pump drive shaft (33) extends along the rotor axis (R) ,
wherein the motor drive shaft (35) is releasably coupled to the pump drive shaft (33) by a drive shaft coupling (37) for transferring torque from the motor drive shaft (35) to the pump drive shaft (33),
the motor drive shaft (35) being hollow from a first axial motor drive shaft end (81) to a second axial motor drive shaft end (83), wherein the pump drive shaft (33) protrudes into the hollow motor drive shaft (35) at the first axial motor drive shaft end (81), wherein the drive shaft coupling (37) is arranged at least partly within the hollow motor drive shaft (35) for transferring torque from the motor drive shaft (35) to the pump drive shaft (33) by frictional connection with a radial inner surface (89) of the hollow motor drive shaft (35) and/or a radial outer surface (93) of the pump drive shaft (33), **characterised in that** the drive shaft coupling (37) is accessible by an elongate tool through the second axial hollow motor drive shaft drive end (83) for selectively tightening and releasing the drive shaft coupling (37).

2. The pump assembly (1) according to claim 1, wherein the radial outer surface (89) of the pump drive shaft (33) and/or the radial inner surface (93) of the hollow motor drive shaft (35) have a frusto-conical shape.

3. The pump assembly (1) according to claim 1 or 2, wherein the drive shaft coupling (37) comprises a radially expandable and/or radially compressible fastening element (95) being at least partly arranged between the radial outer surface (89) of the pump drive shaft (33) and the radial inner surface (93) of the hollow motor drive shaft (35).

4. The pump assembly (1) according to claim 3, wherein the fastening element (95) has a wedged shape corresponding to a frusto-conical shape of the radial outer surface (89) of the pump drive shaft (33) and/or to a frusto-conical shape of the radial inner surface (93) of the hollow motor drive shaft (35).

5. The pump assembly (1) according to claim 3 or 4, wherein the fastening element (95) is axially slotted from one or both axial ends of the fastening element (95).

6. The pump assembly (1) according to claim 5, wherein the fastening element (95) comprises *n* ≥ 2 axial slots (99) distributed in an n-fold rotational symmetry with respect to the rotor axis (R).

7. The pump assembly (1) according to any of the claims 3 to 6, wherein the drive shaft coupling (37) comprises an axially screwable fastener (101) being directly or indirectly coupled to the fastening element (95) by a form fit and/or a thread, wherein the fastener (101) is screwable by an elongate tool being inserted through the second axial hollow motor drive shaft drive end (83) into the hollow motor drive shaft (35).

8. The pump assembly (1) according to any of the claims 3 to 7, wherein the fastening element (95) defines at least one hydraulic pressure chamber (123) arranged between the radial inner surface (93) of the hollow motor drive shaft (35) and the radial outer surface (89) of the pump drive shaft (33), wherein the fastening element (95) is expandable upon pressurising the at least one hydraulic pressure chamber (123).

9. The pump assembly (1) according to claim 7 and 8, wherein the fastener (101) is configured to directly or indirectly press hydraulic fluid into the at least one hydraulic pressure chamber (123) upon being screwed for tightening the drive shaft coupling (37).

10. The pump assembly (1) according to claim 7, wherein the fastener (101) is directly or indirectly coupled to the fastening element (95) for selectively pushing the fastening element (95) towards the first axial motor drive shaft end (81) and pulling the fastening element (95) towards the second axial motor drive shaft end (83).

11. The pump assembly (1) according to claim 10, further comprising a releasing sleeve (107) axially clasping a head (103) of the fastener (101) and being coupled to the fastening element (95) by a form fit (111).

12. The pump assembly (1) according to any of the preceding claims, wherein the electric drive motor (5) comprises a motor housing (51), wherein the motor housing (51) comprises an access opening (117) arranged coaxially with the rotor axis (R) for accessing the drive shaft coupling (37) by an elongate tool through the second axial motor drive shaft end (83).

13. The pump assembly (1) according to any of the preceding claims, wherein the pump drive shaft (33) and/or the motor drive shaft (35) comprises engaging surfaces (121) for a form fit coupling with a tool applied to prevent rotation upon tightening or releasing the drive shaft coupling (37).

14. The pump assembly (1) according to any of the preceding claims, wherein the pump assembly (1) is a dry runner centrifugal pump assembly.

15. The pump assembly (1) according to any of the preceding claims, further comprising a pump drive shaft seal element (26) for sealing the pump housing (3) around the pump drive shaft (33), wherein the pump drive shaft seal (26) is arranged axially between the impeller (13) and the drive shaft coupling (37).

16. The pump assembly (1) according to any of the preceding claims, wherein the electric drive motor (5) is configured to run at speeds above 500 rpm, preferably above 6000 rpm.

## Patentansprüche

1. Pumpenbaugruppe (1), die Folgendes umfasst:
- einen elektrischen Antriebsmotor (5), der mindestens eine Motorantriebswelle (35) und einen Rotor (41) umfasst, wobei sich die Motorantriebswelle (35) entlang einer Rotorachse (R) erstreckt und der Rotor (41) mechanisch an die Motorantriebswelle (35) gekoppelt ist, und
- ein Pumpengehäuse (3), das ein Laufrad (13) umschließt, das mechanisch an eine Pumpenantriebswelle (33) gekoppelt ist, wobei sich die Pumpenantriebswelle (33) entlang der Rotorachse (R) erstreckt,
wobei die Motorantriebswelle (35) durch eine Antriebswellenkupplung (37) lösbar an die Pumpenantriebswelle (33) gekoppelt ist, zum Übertragen von Drehmoment von der Motorantriebswelle (35) zu der Pumpenantriebswelle (33),
die Motorantriebswelle (35) von einem ersten axialen Motorantriebswellenende (81) bis zu einem zweiten axialen Motorantriebswellenende (83) hohl ist, wobei die Pumpenantriebswelle (33) an dem ersten axialen Motorantriebswellenende (81) in die hohle Motorantriebswelle (35) vorspringt, wobei die Antriebswellenkupplung (37) zumindest teilweise innerhalb der hohlen Motorantriebswelle (35) angeordnet ist, zum Übertragen von Drehmoment von der Motorantriebswelle (35) zu der Pumpenantriebswelle (33) durch reibschlüssige Verbindung mit einer radialen Innenfläche (89) der hohlen Motorantriebswelle (35) und/oder einer radialen Außenfläche (93) der Pumpenantriebswelle (33),
**dadurch gekennzeichnet, dass** die Antriebswellenkupplung (37) durch ein längliches Werkzeug durch das zweite axiale hohle Motorantriebswellenende (83) zum selektiven Festziehen und Lösen der Antriebswellenkupplung (37) zugänglich ist.

2. Pumpenbaugruppe (1) nach Anspruch 1, wobei die radiale Außenfläche (89) der Pumpenantriebswelle (33) und/oder die radiale Innenfläche (93) der hohlen Motorantriebswelle (35) eine kegelstumpfförmige Gestalt aufweisen.

3. Pumpenbaugruppe (1) nach Anspruch 1 oder 2, wobei die Antriebswellenkupplung (37) ein in Radialrichtung ausdehnbares und/oder in Radialrichtung zusammendrückbares Befestigungselement (95) umfasst, das zumindest teilweise zwischen der radialen Außenfläche (89) der Pumpenantriebswelle (33) und der radialen Innenfläche (93) der hohlen Motorantriebswelle (35) angeordnet ist.

4. Pumpenbaugruppe (1) nach Anspruch 3, wobei das Befestigungselement (95) eine Keilform aufweist, die einer kegelstumpfförmigen Gestalt der radialen Außenfläche (89) der Pumpenantriebswelle (33) und/oder einer kegelstumpfförmigen Gestalt der radialen Innenfläche (93) der hohlen Motorantriebswelle (35) entspricht.

5. Pumpenbaugruppe (1) nach Anspruch 3 oder 4, wobei das Befestigungselement (95) von einem oder beiden axialen Enden des Befestigungselements (95) aus in Axialrichtung geschlitzt ist.

6. Pumpenbaugruppe (1) nach Anspruch 5, wobei das Befestigungselement (95) n ≥ 2 axiale Schlitze (99) umfasst, die in einer n-fachen Rotationssymmetrie in Bezug auf die Rotorachse (R) angeordnet sind.

7. Pumpenbaugruppe (1) nach einem der Ansprüche 3 bis 6, wobei die Antriebswellenkupplung (37) ein in Axialrichtung schraubbares Befestigungsmittel (101) umfasst, das durch einen Formschluss und/oder ein Gewinde direkt oder indirekt an das Befestigungselement (95) gekoppelt ist, wobei das Befestigungsmittel (101) durch ein längliches Werkzeug schraubbar ist, das durch das zweite axiale hohle Motorantriebswellenende (83) in die Motorantriebswelle (35) eingeführt wird.

8. Pumpenbaugruppe (1) nach einem der Ansprüche 3 bis 7, wobei das Befestigungselement (95) mindestens eine Hydraulikdrucckammer (123) definiert, die zwischen der radialen Innenfläche (93) der hohlen Motorantriebswelle (35) und der radialen Außenfläche (89) der Pumpenantriebswelle (33) angeordnet ist, wobei das Befestigungselement (95) auf ein Unterdrucksetzen der mindestens einen Hydraulikdruckkammer (123) hin ausdehnbar ist.

9. Pumpenbaugruppe (1) nach Anspruch 7 und 8, wobei das Befestigungsmittel (101) dafür konfiguriert ist, nachdem es zum Festziehen der Antriebswellenkupplung (37) geschraubt wird, direkt oder indirekt Hydraulikfluid in die mindestens eine Hydraulikdruckkammer (123) zu pressen.

10. Pumpenbaugruppe (1) nach Anspruch 7, wobei das Befestigungsmittel (101) direkt oder indirekt an das Befestigungselement (95) gekoppelt ist, zum selektiven Schieben des Befestigungselements (95) hin zu dem ersten axialen Motorantriebswellenende (81) und Ziehen des Befestigungselements (95) hin zu dem zweiten axialen Motorantriebswellenende (83).

11. Pumpenbaugruppe (1) nach Anspruch 10, die ferner eine Lösehülse (107) umfasst, die einen Kopf (103) des Befestigungsmittels (101) in Axialrichtung umschließt und durch einen Formschluss (111) an das Befestigungselement (95) gekoppelt ist.

12. Pumpenbaugruppe (1) nach einem der vorhergehenden Ansprüche, wobei der elektrische Antriebsmotor (5) ein Motorgehäuse (51) umfasst, wobei das Motorgehäuse (51) eine Zugangsöffnung (117), die koaxial mit der Rotorachse (R) angeordnet ist, zum Zugreifen auf die Antriebswellenkupplung (37) durch das zweite axiale Motorantriebswellenende (83), umfasst.

13. Pumpenbaugruppe (1) nach einem der vorhergehenden Ansprüche, wobei die Pumpenantriebswelle (33) und/oder die Motorantriebswelle (35) Eingriffsflächen (121) für eine formschlüssige Kopplung mit einem Werkzeug umfassen, das angewendet wird, um nach einem Festziehen oder Lösen der Antriebswellenkupplung (37) eine Drehung zu verhindern.

14. Pumpenbaugruppe (1) nach einem der vorhergehenden Ansprüche, wobei die Pumpenbaugruppe (1) eine Trockenläufer-Zentrifugalpumpenbaugruppe ist.

15. Pumpenbaugruppe (1) nach einem der vorhergehenden Ansprüche, die ferner ein Pumpenantriebswellen-Dichtungselement (26) zum Abdichten des Pumpengehäuses (3) um die Pumpenantriebswelle (33) umfasst, wobei die Pumpenantriebswellen-Dichtung (26) in Axialrichtung zwischen dem Laufrad (13) und der Antriebswellenkupplung (37) angeordnet ist.

16. Pumpenbaugruppe (1) nach einem der vorhergehenden Ansprüche, wobei der elektrische Antriebsmotor (5) dafür konfiguriert ist, mit Geschwindigkeiten oberhalb von 500 U/min, vorzugsweise oberhalb von 6000 U/min, zu laufen.

## Revendications

1. Bloc de pompe (1) comprenant :
- un moteur d'entraînement électrique (5) comprenant au moins un arbre d'entraînement du moteur (35) et un rotor (41), dans lequel l'arbre d'entraînement du moteur (35) s'étend le long d'un axe de rotor (R) et le rotor (41) est mécaniquement couplé à l'arbre d'entraînement du moteur (35) ; et
- un corps de pompe (3) enfermant une turbine (13) qui est mécaniquement couplée à un arbre d'entraînement de la pompe (33), dans lequel l'arbre d'entraînement de la pompe (33) s'étend le long de l'axe de rotor (R),
dans lequel l'arbre d'entraînement du moteur (35) est couplé de manière séparable à l'arbre d'entraînement de la pompe (33) par un accouplement d'arbre d'entraînement (37) pour transmettre du couple de l'arbre d'entraînement du moteur (35) à l'arbre d'entraînement de la pompe (33),
l'arbre d'entraînement du moteur (35) étant creux d'une première extrémité axiale de l'arbre d'entraînement du moteur (81) à une seconde extrémité axiale de l'arbre d'entraînement du moteur (83), dans lequel l'arbre d'entraînement de la pompe (33) fait saillie dans l'arbre d'entraînement creux du moteur (35) au niveau de la première extrémité axiale de l'arbre d'entraînement du moteur (81), dans lequel l'accouplement d'arbre d'entraînement (37) est disposé au moins partiellement dans l'arbre d'entraînement creux du moteur (35) pour transmettre du couple de l'arbre d'entraînement du moteur (35) à l'arbre d'entraînement de la pompe (33) par liaison par friction avec une surface intérieure radiale (89) de l'arbre d'entraînement creux du moteur (35) et/ou une surface extérieure radiale (93) de l'arbre d'entraînement de la pompe (33),
**caractérisé en ce que** l'accouplement d'arbre d'entraînement (37) est accessible par un outil allongé à travers la seconde extrémité axiale de l'arbre d'entraînement creux du moteur (83) pour serrer et desserrer l'accouplement d'arbre d'entraînement (37) de manière sélective.

2. Bloc de pompe (1) selon la revendication 1, dans lequel la surface extérieure radiale (89) de l'arbre d'entraînement de la pompe (33) et/ou la surface intérieure radiale (93) de l'arbre d'entraînement creux du moteur (35) ont une forme tronconique.

3. Bloc de pompe (1) selon la revendication 1 ou 2, dans lequel l'accouplement d'arbre d'entraînement (37) comprend un élément de fixation (95) expansible radialement et/ou compressible radialement étant au moins partiellement disposé entre la surface extérieure radiale (89) de l'arbre d'entraînement de la pompe (33) et la surface intérieure radiale (93) de l'arbre d'entraînement creux du moteur (35).

4. Bloc de pompe (1) selon la revendication 3, dans lequel l'élément de fixation (95) a une forme triangulaire correspondant à une forme tronconique de la surface extérieure radiale (89) de l'arbre d'entraînement de la pompe (33) et/ou à une forme tronconique de la surface intérieure radiale (93) de l'arbre d'entraînement creux du moteur (35).

5. Bloc de pompe (1) selon la revendication 3 ou 4, dans lequel l'élément de fixation (95) est fendu axialement depuis l'une ou les deux extrémités axiales de l'élément de fixation (95).

6. Bloc de pompe (1) selon la revendication 5, dans lequel l'élément de fixation (95) comprend n ≥ 2 fentes axiales (99) réparties selon une symétrie de rotation en n parties par rapport à l'axe de rotor (R).

7. Bloc de pompe (1) selon l'une quelconque des revendications 3 à 6, dans lequel l'accouplement d'arbre d'entraînement (37) comprend une fixation à vissage axial (101) étant directement ou indirectement couplée à l'élément de fixation (95) par un crabot et/ou un filetage, dans lequel la fixation (101) est vissable par un outil allongé étant inséré à travers la seconde extrémité axiale de l'arbre d'entraînement creux du moteur (83) dans l'arbre d'entraînement creux du moteur (35).

8. Bloc de pompe (1) selon l'une quelconque des revendications 3 à 7, dans lequel l'élément de fixation (95) définit au moins une chambre de pression hydraulique (123) disposée entre la surface intérieure radiale (93) de l'arbre d'entraînement creux du moteur (35) et la surface extérieure radiale (89) de l'arbre d'entraînement de la pompe (33), dans lequel l'élément de fixation (95) est expansible lors de la mise sous pression de l'au moins une chambre de pression hydraulique (123).

9. Bloc de pompe (1) selon les revendications 7 et 8, dans lequel la fixation (101) est configurée pour pousser directement ou indirectement du fluide hydraulique dans l'au moins une chambre de pression hydraulique (123) lorsqu'elle est vissée pour serrer l'accouplement d'arbre d'entraînement (37).

10. Bloc de pompe (1) selon la revendication 7, dans lequel la fixation (101) est directement ou indirectement couplée à l'élément de fixation (95) pour pousser de manière sélective l'élément de fixation (95) vers la première extrémité axiale de l'arbre d'entraînement du moteur (81) et tirer l'élément de fixation (95) vers la seconde extrémité axiale de l'arbre d'entraînement du moteur (83).

11. Bloc de pompe (1) selon la revendication 10, comprenant en outre une douille de desserrage (107) serrant axialement une tête (103) de la fixation (101) et étant couplée à l'élément de fixation (95) par un crabot (111).

12. Bloc de pompe (1) selon l'une quelconque des revendications précédentes, dans lequel le moteur d'entraînement électrique (5) comprend un carter de moteur (51), dans lequel le carter de moteur (51) comprend une ouverture d'accès (117) disposée coaxialement avec l'axe de rotor (R) pour accéder à l'accouplement d'arbre d'entraînement (37) à l'aide d'un outil allongé à travers la seconde extrémité axiale de l'arbre d'entraînement du moteur (83).

13. Bloc de pompe (1) selon l'une quelconque des revendications précédentes, dans lequel l'arbre d'entraînement de la pompe (33) et/ou l'arbre d'entraînement du moteur (35) comprend des surfaces d'accrochage (121) pour un accouplement craboté avec un outil appliqué pour empêcher la rotation lors du serrage ou du desserrage de l'accouplement d'arbre d'entraînement (37).

14. Bloc de pompe (1) selon l'une quelconque des revendications précédentes, dans lequel le bloc de pompe (1) est un bloc de pompe centrifuge fonctionnant à sec.

15. Bloc de pompe (1) selon l'une quelconque des revendications précédentes, comprenant en outre un élément d'étanchéité d'arbre d'entraînement de la pompe (26) pour l'étanchéification du corps de pompe (3) autour de l'arbre d'entraînement de la pompe (33), dans lequel le joint d'arbre d'entraînement de la pompe (26) est disposé axialement entre la turbine (13) et l'accouplement d'arbre d'entraînement (37).

16. Bloc de pompe (1) selon l'une quelconque des revendications précédentes, dans lequel le moteur d'entraînement électrique (5) est configuré pour fonctionner à des vitesses supérieures à 500 tr/min, de préférence supérieures à 6000 tr/min.
